# EUROPEAN PATENT APPLICATION

(11) **EP 4 801 037 A1**
(43) Date of publication of application: **02.09.2026**
(21) Application number: 24899660.5
(22) Date of filing: 25.11.2024
(51) Int. Cl.: H04N 19/56

(54) **MOTION ESTIMATION START POINT DETERMINATION METHOD, SYSTEM AND DEVICE, AND STORAGE MEDIUM**

(30) Priority: 04.12.2023 CN 202311652295
(71) Applicant: BIGO TECHNOLOGY PTE. LTD., Singapore 117440 (SG)
(72) Inventor: LIU, Jie, Guangzhou, Guangdong 511402 (CN)
(74) Representative: Yang, Shu
(86) International application number: PCT/CN2024/134188
(87) International publication number: WO 2025/119019

(57) **Abstract**

Embodiments of the present application disclose a motion estimation start point determination method, system and device, and a storage medium. The technical solution provided by the embodiments of the present application comprises: acquiring a first candidate motion vector in a conventional motion estimation process, and determining first cost information of the first candidate motion vector; determining a second candidate motion vector on the basis of a control point candidate list of an affine advanced motion vector prediction mode, and determining second cost information of the second candidate motion vector; and on the basis of a comparison result between the first cost information and the second cost information, determining the first candidate motion vector and/or the second candidate motion vector as a candidate start point, so as to perform an affine motion estimation on the basis of the candidate start point, and deciding an optimal unidirectional affine motion vector on the basis of an affine motion estimation result. By using the technical means, a candidate start point can be adaptively selected to implement an affine motion estimation process, thereby ensuring the optimal motion vector in the motion estimation process, and thus improving the coding performance and the coding quality.

## Description

This application is based upon and claims priority to Chinese Patent Application No. 202311652295.6, filed on December 4, 2023, the entire contents of which are incorporated herein by reference.

### TECHNICAL FIELD

The embodiments of the present disclosure relate to the technical field of video coding, and more particularly, to a method, system, and device for determining a starting point of motion estimation, and a storage medium thereof.

### BACKGROUND

Currently, in the motion estimation scenario of video coding, due to the diversity of motion types (such as translation, scaling, rotation, and perspective), the inter-frame motion estimation generally includes conventional motion estimation (CME) and affine motion estimation (AME). When determining the starting point of motion estimation, the optimal motion vector determined in the CME and the candidate in the affine advanced motion vector prediction (AMVP) mode are usually determined as candidate motion vectors. Then, based on the sum of absolute transformed difference cost (satdCost) of the candidate motion vectors, the candidate motion vector with the smaller cost is selected as the candidate starting point, and AME is performed to obtain the final affine motion vector result.

However, simply determining the starting point of motion estimation based on candidate motion vectors is prone to overlooking better candidate motion vectors, which can lead to the non-optimal motion estimation result and result in poor video coding quality.

### SUMMARY

The embodiments of the present disclosure provide a method, system, and device for determining a starting point of motion estimation, and a storage medium thereof, which can accurately determine the starting point of motion estimation, improve the video coding quality, and solve the problem that the motion estimation result is non-optimal.

In the first aspect, embodiments of the present disclosure provide a method for determining a starting point of motion estimation. The method includes: obtaining a first candidate motion vector in CME, and determining first cost information of the first candidate motion vector; determining a second candidate motion vector based on a control point candidate list in an affine AMVP mode, and determining second cost information of the second candidate motion vector; and determining the first candidate motion vector and/or the second candidate motion vector as candidate starting points based on a comparison result of the first cost information and the second cost information to perform AME based on the candidate starting points, and determining an optimal unidirectional affine motion vector based on affine motion estimation results.

In the second aspect, embodiments of the present disclosure provide a system for determining a starting point of motion estimation. The system includes: a first determining module, configured to obtain a first candidate motion vector in CME, and determine first cost information of the first candidate motion vector; a second determining module, configured to determine a second candidate motion vector based on a control point candidate list in an affine AMVP mode, and determine second cost information of the second candidate motion vector; and a determination-performing module, configured to determine the first candidate motion vector and/or the second candidate motion vector as candidate starting points based on a comparison result of the first cost information and the second cost information to perform AME based on the candidate starting points, and determine an optimal unidirectional affine motion vector based on affine motion estimation results.

In the third aspect, embodiments of the present disclosure provide a device for determining a starting point of motion estimation. The device includes: a memory and one or more processors; wherein the memory is configured to store one or more programs; wherein the one or more programs, when run by the one or more processors, cause the one or more processors to perform the method for determining the starting point of motion estimation as described in the first aspect.

In the fourth aspect, embodiments of the present disclosure provide a computer-readable storage medium. The computer-readable storage medium stores one or more computer-executable instructions therein, wherein the one or more computer-executable instructions when executed by a processor of a computer, cause the computer to perform the method for determining the starting point of motion estimation as described in the first aspect.

In the fifth aspect, embodiments of the present disclosure provide a computer program product. The computer program product includes one or more instructions, wherein the one or more instructions, when executed on a computer or processor, cause the computer or processor to perform the method for determining the starting point of motion estimation as described in the first aspect.

In embodiments of the present disclosure, the first candidate motion vector in the CME is obtained, and the first cost information of the first candidate motion vector is determined. The second candidate motion vector is determined based on the control point candidate list in the affine AMVP mode, and the second cost information of the second candidate motion vector is determined. Based on the comparison result of the first cost information and the second cost information, the first candidate motion vector and/or the second candidate motion vector are determined as the candidate starting points, so as to perform AME based on the candidate starting points. The optimal unidirectional affine motion vector is obtained through determination-making based on the affine motion estimation results. By using the above technical means, the candidate starting point of the AME is determined based on the comparison result of different pieces of cost information of candidate motion vectors. This allows for adaptive selection of the candidate starting point for the AME, thereby more accurately determining the starting point for motion estimation, ensuring that the optimal motion vector is obtained for the motion estimation, and further improving coding performance and coding quality.

### BRIEF DESCRIPTION OF DRAWINGS

FIG. 1 is a flowchart of a method for determining a starting point of motion estimation according to some embodiments of the present disclosure;
FIG. 2 is a schematic diagram of motion estimation based on an affine AMVP mode according to some embodiments of the present disclosure;
FIG. 3 is a flowchart for determining an affine motion estimation result according to some embodiments of the present disclosure;
FIG. 4 is a schematic diagram of 4-parameter and 6-parameter control points;
FIG. 5 is a schematic diagram of AME based on a 4-parameter control point;
FIG. 6 is a schematic structural diagram of a system for determining a starting point of motion estimation according to some embodiments of the present disclosure; and
FIG. 7 is a schematic structural diagram of a device for determining a starting point of motion estimation according to some embodiments of the present disclosure.

### DETAILED DESCRIPTION

To make the objectives, technical solutions, and advantages of the present disclosure clearer, the specific embodiments of the present disclosure will be further described in detail below with reference to the accompanying drawings. It should be understood that the specific embodiments described here are merely used to explain but not limit the present disclosure it. Additionally, it should be noted that, for ease of description, only a portion, but not all, of the drawings related to the present disclosure is shown. Before discussing the exemplary embodiments in more detail, it should be mentioned that some exemplary embodiments are described as processes or methods depicted in flowcharts. Although the flowcharts describe various operations (or steps) as sequential processes, many of these operations can be implemented in parallel, concurrently, or simultaneously. Furthermore, the order of the operations can be rearranged. The processes can be terminated when their operations are completed, and may also include additional steps not included in the drawings. The processes can correspond to methods, functions, procedures, subroutines, subprograms, and so on.

The method for determining the starting point of motion estimation according to the present disclosure aims to adaptively select the candidate motion vector for the AME, and determine the starting point of motion estimation based on the modified candidate affine motion vector, thereby achieving more accurate determination of the starting point of motion estimation.

The basic idea of motion estimation is to divide each frame of an image sequence into many non-overlapping macroblocks, assuming that all pixels within a macroblock have the same displacement. Then, for each macroblock, the block that is most similar to the current block, namely the matching block, is found from a given search range in the reference frame according to certain matching criteria. The relative displacement between the matching block and the current block is the motion vector. During video compression, only the motion vectors and residual data need to be saved to fully recover the current block.

In relevant motion estimation scenarios, it is necessary to accurately determine the starting point of motion estimation, so as to precisely find the corresponding matching block from the starting point. The process of determining the starting point of motion estimation generally involves CME and AME. In the process of determining the starting point of motion estimation, the satdCost of each candidate in the candidate list in the affine AMVP mode (one of the inter-frame prediction modes, also known as the inter mode) is typically calculated, and the optimal affine control point motion vector (CPMV), used to store the motion vector representation of the affine mode) is selected. For the CME, an optimal affine CPMV is also determined. The optimal affine CPMV candidate is selected by comparing the satdCost of the two affine CPMVs and determined as the starting point of motion estimation. Then, this optimal affine CPMV is used for affine motion estimation (ME) to fit a better affine CPMV, and the better affine CPMV serves as the optimal affine motion estimation result.

Considering that only the optimal affine CPMV is selected for AME after the CPMV candidate list in the affine AMVP mode is obtained, and the affine motion estimation results of other affine CPMVs with relatively large satdCost may be better, selecting only the affine CPMV with the minimum satdCost for AME may lead to the omission of better affine motion estimation results, thus resulting in the non-optimal motion estimation result and affecting the video coding quality. Thus, a method for determining a starting point of motion estimation in embodiments of the present disclosure is provided to solve the technical problem that the motion estimation result is non-optimal.

### Embodiments

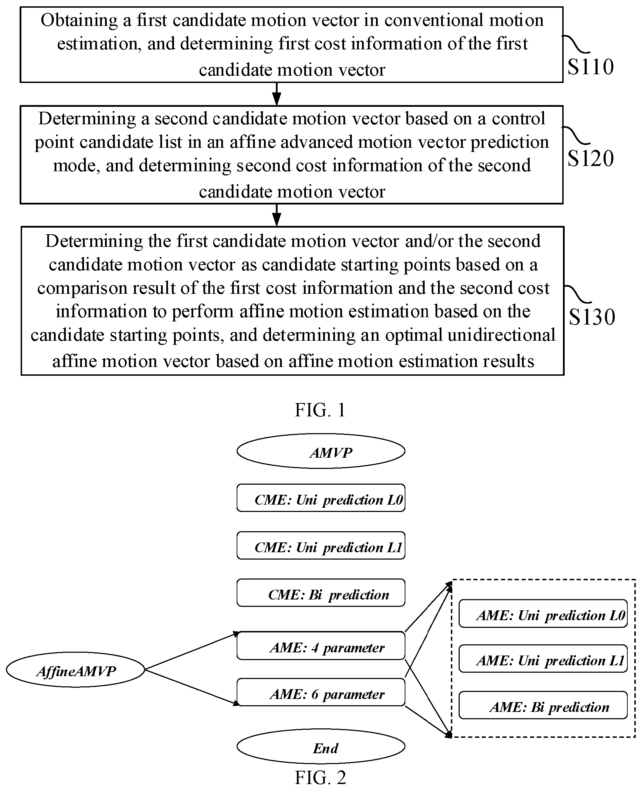

FIG. 1 is a flowchart of a method for determining a starting point of motion estimation according to some embodiments of the present disclosure. The method for determining the starting point of motion estimation according to the embodiments may be performed by a device for determining a starting point of motion estimation, and the device for determining the starting point of motion estimation may be implemented through software and/or hardware. The device for determining the starting point of motion estimation may be composed of two or more physical entities, or may be composed of one physical entity. Generally speaking, the device for determining the starting point of motion estimation may be a processing device such as a video coding server or video coding device.

The following description is illustrated using an example where the device for determining the starting point of motion estimation is the entity performing the method for determining the starting point of motion estimation. Referring to FIG. 1, the method for determining the starting point of motion estimation specifically includes the following steps.

In S110, a first candidate motion vector in a CME is obtained, and first cost information of the first candidate motion vector is determined.

In the embodiments of the present disclosure, during determining the starting point of motion estimation, in order to avoid omitting the better affine motion estimation result, the affine motion estimation determination is made by combining the affine CPMV in the CME with the affine CPMV determined in the affine AMVP mode. The candidate motion vectors are adaptively selected for AME, thereby ensuring that the obtained affine motion estimation result is optimal.

Specifically, referring to FIG. 2, FIG. 2 is a schematic diagram of motion estimation based on an affine AMVP mode in the present disclosure. In the process of determining the starting point for motion estimation, a CPMV is first determined based on the CME and is defined as the first candidate motion vector. In the CME, motion vectors are determined as candidates through forward Uni prediction L0, backward Uni prediction L1, and bidirectional Bi prediction, respectively. Then, based on the satdCost of each candidate, the candidate with the minimum satdCost is selected as the first candidate motion vector, denoted as affMV1. The satdCost of this first candidate motion vector is defined as the first cost information, denoted as candCost1.

In S120, a second candidate motion vector is determined based on a control point candidate list in an affine AMVP mode, and second cost information of the second candidate motion vector is determined.

Furthermore, for the candidate determined in the affine AMVP mode, the corresponding CPMV is also determined and defined as the second candidate motion vector, denoted as affMV2. The satdCost of the second candidate motion vector is the second cost information, denoted as candCost2.

The control point candidate list includes the control point motion vector of an adjacent coding unit (CU), a control point motion vector constructed from a translational motion vector of an adjacent CU, a translational motion vector of an adjacent CU, a temporal motion vector, and a zero motion vector.

Several candidates may be provided in the control point candidate list in the affine AMVP mode, and are generated in sequence from the following four types of CPMV candidates:
inheriting the CPMV candidate of an adjacent CU;
constructing the CPMV from the translational motion vector (MV) of an adjacent CU;
directly using the translation MV of the adjacent CU; and
supplementing temporal motion vector prediction (TMVP) and zero MV candidates;

By selecting different motion vectors from the four types of CPMV candidates as candidates in sequence, a control point candidate list may be constructed. The number of candidates in the candidate list may be set according to actual needs. If the motion vector obtained in the previous sequence satisfies the candidate requirement, there is no need to determine the candidates in the next sequence. Thus, by selecting the motion vectors according to the sequence of candidates, the control point candidate list may be obtained.

Similarly, based on the satdCost of the candidates in the candidate list, the candidate with the minimum satdCost is selected as the second candidate motion vector.

In S130, the first candidate motion vector and/or the second candidate motion vector are determined as candidate starting points based on a comparison result between the first cost information and the second cost information to perform AME based on the candidate starting points, and an optimal unidirectional affine motion vector is determined based on affine motion estimation results.

Furthermore, in the embodiments of the present disclosure, based on the aforementioned first candidate motion vector and second candidate motion vector, one or two candidate motion vectors are selected by comparing the cost information of the aforementioned first candidate motion vector and second candidate motion vector to perform the AME. This approach avoids the situation where the better motion estimation result is omitted due to the simpler motion estimation based on only one candidate motion vector. By comparing two candidate motion vectors to determine the starting point for AME, a better coding effect can be achieved.

Specifically, the second candidate motion vectors are determined using the control point candidate list in the 4-parameter affine AMVP mode and the control point candidate list in the 6-parameter affine AMVP mode, respectively; correspondingly, the affine motion estimation results include the 4-parameter optimal affine motion vector and the 6-parameter optimal affine motion vector.

In the affine AMVP mode, the unidirectional (forward and backward) AME is performed. Then, the affine motion estimation results obtained from various motion estimation processes are compared to determine the optimal unidirectional affine motion vector. Afterwards, the optimal unidirectional affine motion vectors (forward and backward) may be compared with the bidirectional motion vector, and the motion vector with the minimum cost is selected as the final motion estimation result.

Referring to FIG. 2, the unidirectional AME includes 4-parameter motion estimation and 6-parameter motion estimation, which requires 4 parameters and 6 parameters for AME respectively. Therefore, it is necessary to determine the corresponding two second candidate motion vectors based on the control point candidate list in the 4-parameter affine AMVP mode and the control point candidate list in the 6-parameter affine AMVP mode, respectively. These two candidate motion vectors are then compared with the first candidate motion vector to determine the corresponding candidate starting points for affine motion estimation, thereby obtaining the corresponding optimal 4-parameter affine motion vector and optimal 6-parameter affine motion vector.

Illustratively, taking 4-parameter motion estimation as an example, in the unidirectional affine AMVP mode, the CPMV candidate list modeList is obtained for the forward L0 4-parameter affine AMVP mode (candidates are constructed in sequence, and a maximum of two candidates is obtained). Then, the satdCost of this candidate list is calculated, and the optimal affine CPMV starting point candidate, namely the first candidate motion vector affMV1, is selected, with a corresponding satdCost of candCost1 (that is, the first cost information). The corresponding CPMV obtained from the CME is constructed as an additional affine CPMV candidate, and the satdCost is calculated, namely the second candidate motion vector affMV2, with a corresponding satdCost of candCost2 (that is, the second cost information).

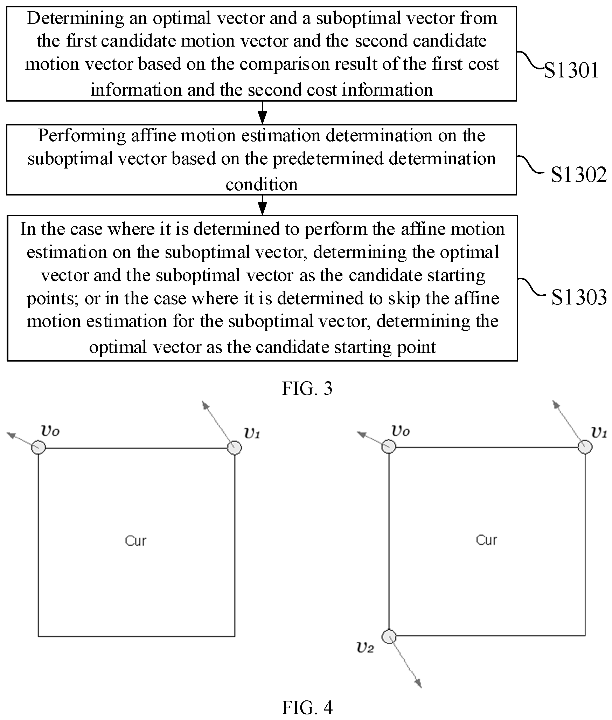

Then, candidate starting points are determined based on the cost information. Referring to FIG. 3, determining the first candidate motion vector and/or the second candidate motion vector as the candidate starting points based on the comparison result of the first cost information and the second cost information includes the following steps.

In S1301, an optimal vector and a suboptimal vector are determined from the first candidate motion vector and the second candidate motion vector based on the comparison result of the first cost information and the second cost information.

In S1302, affine motion estimation determination is performed on the suboptimal vector based on the predetermined determination condition.

In S1303, in the case where it is determined to perform the AME on the suboptimal vector, the optimal vector and the suboptimal vector are determined as the candidate starting points; or in the case where it is determined to skip the AME for the suboptimal vector, the optimal vector is determined as the candidate starting point.

In embodiments of the present disclosure, the first cost information and the second cost information are compared to determine one of the first candidate motion vector and the second candidate motion vector with a lower cost as the optimal vector, and the other candidate motion vector is determined as the suboptimal vector. In embodiments of the present disclosure, the optimal vector is determined as the candidate starting point for AME by default. For the suboptimal motion vector, a determination condition is predetermined to determine whether to use the suboptimal vector as the candidate starting point for AME, thereby obtaining the corresponding affine motion estimation result.

The predetermined determination condition is that the cost information of the optimal vector is different from that of the suboptimal vector, and the cost information of the optimal vector is greater than a predetermined multiple of the cost information of the suboptimal vector.

Performing the affine motion estimation determination on the suboptimal vector based on the predetermined determination condition includes:
in a case where the suboptimal vector satisfies the predetermined determination condition, performing the AME on the suboptimal vector; or
in a case where the suboptimal vector does not satisfy the predetermined determination condition, skipping the AME for the suboptimal vector.

Illustratively, affMV1 is compared with affMV2. If candCost1 is lower than candCost2, then AME is first performed on affMV1 to obtain a modified affine motion estimation result, denoted as affMV_ME1; otherwise, AME is first performed on affMV2 to obtain affMV_ME2; then, based on the candCost of the optimal vector and the candCost of the suboptimal vector, whether to skip the AME for the suboptimal vector is determined. The maximum and minimum values of candCost1 and candCost2 are determined as maxCandCost and minCandCost, respectively. Then, a flag bit skipTestReAffineME is set to skip the AME for the suboptimal vector, and the determination condition is:
skipTestReAffineME = (maxCandCost ≠ minCandCost) ? (maxCandCost > minCandCost * Thresh) : true.

Thresh is the cost threshold for skipping the AME, and may be set to 2 in the encoder; when maxCandCost == minCandCost, it indicates that the costs of the two CPMVs, that is, affMV1 and affMV2, are consistent, and there is no need for secondary AME on the suboptimal vector; or when maxCandCost ≠ minCandCost, and maxCandCost > minCandCost * Thresh, it indicates that the difference between the costs of the two CPMV candidate starting points is large, and there is no need for secondary AME on the suboptimal vector.

When skipTestReAffineME is false, the secondary AME is performed on the suboptimal vector. Specifically, if the optimal vector is affMV1, priority is given to the AME of affMV1. During determining to perform the secondary AME, the AME is performed on the suboptimal vector affMV2. The affine motion estimation results of both vectors are determined as the final affine motion estimation results, and vice versa. Subsequently, if the AME is only performed on the optimal vector, the affine motion estimation result of the optimal vector is determined as the 4-parameter optimal affine motion vector. If the AME is performed on both the optimal and suboptimal vectors, their respective satdCosts are calculated based on the two affine motion estimation results, and the minimum satdCost is selected as the 4-parameter optimal affine motion vector, denoted as affineMV_4para. Similarly, for 6-parameter AME, the optimal and suboptimal vectors are selected by referring to the aforementioned 4-parameter AME. The corresponding 6-parameter optimal affine motion vector is determined based on the AME based on the optimal and suboptimal vectors, and is denoted as affineMV_6para.

Specifically, the AME represents the process of AME, and includes 4/6 parameter AME, each of which includes unidirectional (forward L0, backward L1) and bidirectional (Bi) motion estimation processes. As shown in FIG. 4, the affine motion field of an unit is described by two control points (4 parameters) or three control points (6 parameters) of motion vectors, which increases the diversity of motion vectors and enhances the accuracy of prediction.

The AME based on CUs is as follows.

First, the CU is divided into 4 x 4 luminance sub-units. For each luminance sub-unit, the motion vector of the central pixel is calculated from the affine vector using the following formula, and then rounded to 1/16 precision. For the 4-parameter affine motion model, the motion vector of the sub-unit with the central pixel at (x, y) is calculated as follows:
$\left\{\begin{matrix}{mv}_{x} = \frac{{mv}_{1 x} - {mv}_{0 x}}{w} x - \frac{{mv}_{1 y} - {mv}_{0 y}}{w} y + {mv}_{0 x} \\ {mv}_{y} = \frac{{mv}_{1 y} - {mv}_{0 y}}{w} x + \frac{{mv}_{1 x} - {mv}_{0 x}}{w} y + {mv}_{0 y}\end{matrix}\right. .$

For the 6-parameter affine motion model, the motion vector of the sub-unit with the central pixel at (x, y) is calculated as follows:
$\left\{\begin{matrix}{mv}_{x} = \frac{{mv}_{1 x} - {mv}_{0 x}}{W} x + \frac{{mv}_{2 x} - {mv}_{0 x}}{H} y + {mv}_{0 x} \\ {mv}_{y} = \frac{{mv}_{1 y} - {mv}_{0 y}}{W} x + \frac{{mv}_{2 x} - {mv}_{0 x}}{H} y + {mv}_{0 y}\end{matrix}\right. .$

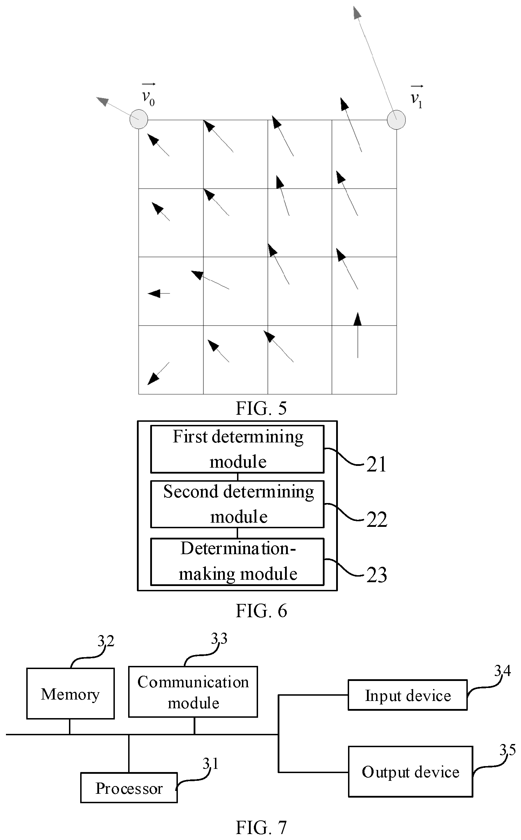

(mv₀ₓ, mv_{0y}), (mv₁ₓ, mv_{1y}), (mv₂ₓ, mv_{2y}) represent the CPMVs at the top left corner, top right corner, and bottom left corner, respectively. The motion vector for each sub-unit is calculated as shown in FIG. 5, and motion compensation interpolation filtering is performed based on the motion vector to obtain the predicted value for each sub-unit. For the chroma component, the CU is also divided into 4 x 4 sub-units, and the motion vector of each sub-unit is equal to the average value of the motion vectors of the four 4 x 4 luminance sub-units associated with the each sub-unit. This results in 4-parameter and 6-parameter affine motion estimation results.

Afterwards, based on the 4-parameter optimal affine motion vector and the 6-parameter optimal affine motion vector, the optimal unidirectional affine motion vector may be determined. Determining the optimal unidirectional affine motion vector based on the affine motion estimation results includes:
selecting a motion vector with lower cost information from the 4-parameter optimal affine motion vector and the 6-parameter optimal affine motion vector as the optimal unidirectional affine motion vector.

Referring to the aforementioned unidirectional affine motion estimation method, the optimal unidirectional affine motion vector is selected based on the forward and backward 4-parameter candidate affine motion vectors and the forward and backward 6-parameter optimal affine motion vectors, respectively. Through this method, the corresponding optimal unidirectional affine motion vectors for forward AME and backward AME may be determined, namely the optimal forward unidirectional affine motion vector or the optimal backward unidirectional affine motion vector. For both forward AME and backward AME, the optimal unidirectional affine motion vectors are determined in the aforementioned manner. Subsequently, based on the bidirectional affine motion estimation result and the aforementioned optimal forward and backward unidirectional affine motion vectors, the optimal affine motion vector with the minimum cost information is selected as the final motion vector result of the AME. There are many methods for bidirectional AME, and no limitation is imposed here. The embodiments of the present disclosure focus on determining the candidate starting points in the unidirectional AME, and the candidate starting points are used to subsequently determine the optimal motion estimation result. By adding the candidate CPMV in the affine AMVP mode and performing the AME separately, a better affine MV result may be obtained. Considering that after obtaining the CPMV candidate list in traditional affine AMVP, only the optimal CPMV is selected for motion estimation, which may easily omit the better affine MV result, the present disclosure attempts to select the suboptimal CPMV and perform the AME separately, which can increase the range and possibility of obtaining the better affine motion estimation result, thus achieving better coding effects.

As mentioned above, the first candidate motion vector in the CME is obtained, and the first cost information of the first candidate motion vector is determined. The second candidate motion vector is determined based on the control point candidate list in the affine AMVP mode, and the second cost information of the second candidate motion vector is determined. Based on the comparison result of the first cost information and the second cost information, the first candidate motion vector and/or the second candidate motion vector are determined as the candidate starting points, so as to perform AME based on the candidate starting points. The optimal unidirectional affine motion vector is obtained through determination-making based on the affine motion estimation results. By using the above technical means, the candidate starting point of the AME is determined based on the comparison result of different pieces of cost information of candidate motion vectors. This allows for adaptive selection of the candidate starting point for the AME, thereby more accurately determining the starting point for motion estimation, ensuring that the optimal motion vector is obtained for the motion estimation, and further improving coding performance and coding quality.

Based on the above embodiments, FIG. 6 is a schematic structural diagram of a system for determining a starting point of motion estimation according to the present disclosure. Referring to FIG. 6, the system for determining the starting point of motion estimation provided in the embodiments specifically includes: a first determining module 21, a second determining module 22, and a determination-making module 23.
The first determining module 21 is configured to obtain a first candidate motion vector in CME, and determine first cost information of the first candidate motion vector;
The second determining module 22 is configured to determine a second candidate motion vector based on a control point candidate list in an affine AMVP mode, and determine second cost information of the second candidate motion vector;
The determination-making module 23 is configured to determine the first candidate motion vector and/or the second candidate motion vector as candidate starting points based on a comparison result of the first cost information and the second cost information to perform AME based on the candidate starting points, and determine an optimal unidirectional affine motion vector based on affine motion estimation results.

Specifically, determining the first candidate motion vector and/or the second candidate motion vector as the candidate starting points based on the comparison result of the first cost information and the second cost information includes:
determining an optimal vector and a suboptimal vector from the first candidate motion vector and the second candidate motion vector based on the comparison result of the first cost information and the second cost information;
performing affine motion estimation determination on the suboptimal vector based on a predetermined determination condition; and
in the case where it is determined to perform the AME on the suboptimal vector, determining the optimal vector and the suboptimal vector as the candidate starting points; or
in the case where it is determined to skip the AME for the suboptimal vector, determining the optimal vector as a candidate starting point.

Specifically, the predetermined determination condition is that cost information of the optimal vector is different from cost information of the suboptimal vector, and the cost information of the optimal vector is greater than a predetermined multiple of the cost information of the suboptimal vector; and
performing the affine motion estimation determination on the suboptimal vector based on the predetermined determination condition includes:
in a case where the suboptimal vector satisfies the predetermined determination condition, performing the AME on the suboptimal vector; or
in a case where the suboptimal vector does not satisfy the predetermined determination condition, skipping the AME for the suboptimal vector.

Second candidate motion vectors are determined respectively using a control point candidate list in a 4-parameter affine AMVP mode and a control point candidate list in a 6-parameter affine AMVP mode; and
correspondingly, the affine motion estimation results include a 4-parameter optimal affine motion vector and a 6-parameter optimal affine motion vector.
determining the optimal unidirectional affine motion vector based on the affine motion estimation results includes:
   selecting a motion vector with lower cost information from the 4-parameter optimal affine motion vector and the 6-parameter optimal affine motion vector as the optimal unidirectional affine motion vector.

Specifically, the control point candidate list includes a control point motion vector of an adjacent CU, a control point motion vector constructed from a translational motion vector of an adjacent CU, a translational motion vector of an adjacent CU, a temporal motion vector, and a zero motion vector.

As mentioned above, the first candidate motion vector in the CME is obtained, and the first cost information of the first candidate motion vector is determined. The second candidate motion vector is determined based on the control point candidate list in the affine AMVP mode, and the second cost information of the second candidate motion vector is determined. Based on the comparison result of the first cost information and the second cost information, the first candidate motion vector and/or the second candidate motion vector are determined as the candidate starting points, so as to perform AME based on the candidate starting points. The optimal unidirectional affine motion vector is obtained through determination-making based on the affine motion estimation results. By using the above technical means, the candidate starting point of the AME is determined based on the comparison result of different pieces of cost information of candidate motion vectors. This allows for adaptive selection of the candidate starting point for the AME, thereby more accurately determining the starting point for motion estimation, ensuring that the optimal motion vector is obtained for the motion estimation, and further improving coding performance and coding quality.

The system for determining the starting point of motion estimation according to the embodiments of the present disclosure may be configured to execute the method for determining the starting point of motion estimation according to the above embodiments, with the corresponding functions and beneficial effects.

Based on the above practical examples, embodiments of the present disclosure further provide a device for determining a starting point of motion estimation. Referring to FIG. 7, the device for determining the starting point of motion estimation includes: a processor 31, a memory 32, a communication module 33, an input device 34, and an output device 35. The memory, as a computer-readable storage medium, may be configured to store software programs, computer-executable programs, and modules, such as the program instructions/modules (e.g., the first determining module, the second determining module, and the determination-making module in the system for determining the starting point of motion estimation) corresponding to the method for determining the starting point of motion estimation in any embodiment of the present disclosure. The communication module is configured for data transmission. The processor executes various functional applications and data processing of the device by running software programs, instructions, and modules stored in the memory, thereby performing the above-mentioned method for determining the starting point of motion estimation. The input device may be configured to receive inputted numerical or character information and generate key signal inputs related to user settings and function control of the device. The output device may include display devices such as a display screen. The above device for determining the starting point of motion estimation may be configured to execute the method for determining the starting point of motion estimation according to the above embodiments, with the corresponding functions and beneficial effects.

Based on the above embodiments, embodiments of the present disclosure further provide a computer-readable storage medium. The computer-readable storage medium stores one or more computer-executable instructions therein, wherein the one or more computer-executable instructions, when executed by a processor of a computer, cause the computer to perform the method for determining the starting point of motion estimation. The storage medium may be any type of memory device or storage device. The one or more computer-executable instructions in the computer-readable storage medium according to some embodiments of the present disclosure, when executed, are not limited to performing the method for determining the starting point of motion estimation as described above, but may also performing related operations in the method for determining the starting point of motion estimation according to any embodiment of the present disclosure.

Based on the above embodiments, embodiments of the present disclosure further provide a computer program product. The technical solutions according to the present disclosure, in essence, or the part that contributes to the existing technology, or all or part of the technical solution, may be embodied in the form of a software product. The computer program product is stored in a storage medium and includes several instructions for enabling a computer device, mobile terminal, or the processor therein to perform all or part of the steps of the method for determining the starting point of motion estimation described in various embodiments of the present disclosure.

## Claims

1. A method for determining a starting point of motion estimation, comprising:
obtaining a first candidate motion vector in conventional motion estimation, and determining first cost information of the first candidate motion vector;
determining a second candidate motion vector based on a control point candidate list in an affine advanced motion vector prediction mode, and determining second cost information of the second candidate motion vector; and
determining the first candidate motion vector and/or the second candidate motion vector as candidate starting points based on a comparison result of the first cost information and the second cost information to perform affine motion estimation based on the candidate starting points, and determining an optimal unidirectional affine motion vector based on affine motion estimation results.

2. The method according to claim 1, wherein determining the first candidate motion vector and/or the second candidate motion vector as the candidate starting points based on the comparison result of the first cost information and the second cost information comprises:
determining an optimal vector and a suboptimal vector from the first candidate motion vector and the second candidate motion vector based on the comparison result of the first cost information and the second cost information;
performing affine motion estimation determination on the suboptimal vector based on a predetermined determination condition; and
in a case where it is determined to perform the affine motion estimation on the suboptimal vector, determining the optimal vector and the suboptimal vector as the candidate starting points; or in a case where it is determined to skip the affine motion estimation for the suboptimal vector, determining the optimal vector as a candidate starting point.

3. The method according to claim 2, wherein
the predetermined determination condition is that cost information of the optimal vector is different from cost information of the suboptimal vector, and the cost information of the optimal vector is greater than a predetermined multiple of the cost information of the suboptimal vector; and
performing the affine motion estimation determination on the suboptimal vector based on the predetermined determination condition comprises:
in a case where the suboptimal vector satisfies the predetermined determination condition, performing the affine motion estimation on the suboptimal vector; or
in a case where the suboptimal vector does not satisfy the predetermined determination condition, skipping the affine motion estimation for the suboptimal vector.

4. The method according to claim 1, wherein
second candidate motion vectors are determined respectively using a control point candidate list in a 4-parameter affine advanced motion vector prediction mode and a control point candidate list in a 6-parameter affine advanced motion vector prediction mode; and
correspondingly, the affine motion estimation results comprise a 4-parameter optimal affine motion vector and a 6-parameter optimal affine motion vector.

5. The method according to claim 4, wherein determining the optimal unidirectional affine motion vector based on the affine motion estimation results comprises:
selecting a motion vector with lower cost information from the 4-parameter optimal affine motion vector and the 6-parameter optimal affine motion vector as the optimal unidirectional affine motion vector.

6. The method according to claim 1, wherein the control point candidate list comprises a control point motion vector of an adjacent coding unit, a control point motion vector constructed from a translational motion vector of an adjacent coding unit, a translational motion vector of an adjacent coding unit, a temporal motion vector, and a zero motion vector.

7. A system for determining a starting point of motion estimation, comprising:
a first determining module, configured to obtain a first candidate motion vector in conventional motion estimation, and determine first cost information of the first candidate motion vector;
a second determining module, configured to determine a second candidate motion vector based on a control point candidate list in an affine advanced motion vector prediction mode, and determine second cost information of the second candidate motion vector; and
a determination-making module, configured to determine the first candidate motion vector and/or the second candidate motion vector as candidate starting points based on a comparison result of the first cost information and the second cost information to perform affine motion estimation based on the candidate starting points, and determine an optimal unidirectional affine motion vector based on affine motion estimation results.

8. A device for determining a starting point of motion estimation, comprising:
a memory and one or more processors; wherein
the memory is configured to store one or more programs;
wherein the one or more programs, when run by the one or more processors, cause the one or more processors to perform the method as defined in any one of claims 1 to 6.

9. A computer-readable storage medium, storing one or more computer-executable instructions therein, wherein the one or more computer-executable instructions, when executed by a processor of a computer, cause the computer to perform the method as defined in any one of claims 1 to 6.

10. A computer program product, comprising: one or more instructions, wherein the one or more instructions, when executed by a computer or processor, cause the computer or processor to perform the method as defined in any one of claims 1 to 6.
